(19) **Europäisches Patentamt / European Patent Office / Office européen des brevets**

(11) **EP 4 716 107 A1**

(12) **EUROPEAN PATENT APPLICATION**
published in accordance with Art. 153(4) EPC

(43) Date of publication:
**25.03.2026 Bulletin 2026/13**

(21) Application number: **23938808.5**

(22) Date of filing: **30.05.2023**

(51) International Patent Classification (IPC):
**H04B 7/0456** (2017.01)    **G06N 3/08** (2023.01)

(52) Cooperative Patent Classification (CPC):
**G06N 3/08; H04B 7/0456**

(86) International application number:
**PCT/CN2023/097203**

(87) International publication number:
**WO 2024/243813 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
- **GUO, Jia**
  **Beijing 100191 (CN)**
- **YANG, Chenyang**
  **Beijing 100191 (CN)**
- **WANG, Jian**
  **Shenzhen, Guangdong 518129 (CN)**
- **LI, Rong**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **INFORMATION PROCESSING METHOD AND APPARATUS**

(57)    An information processing method includes: obtaining channel state information between at least one network device and at least one terminal device; and processing the channel state information by using a GNN, to obtain precoding between the at least one network device and the at least one terminal device, where the GNN includes a first non-linear unit and a second non-linear unit. The first non-linear unit is configured to calculate a correlation between an edge feature of a target edge in graph data used by the GNN and an edge feature of each edge on each target node, to obtain at least one correlation result, and the target node includes a node connected to the target edge and a node of a same type as the node connected to the target edge. The second non-linear unit is configured to aggregate a result obtained by summarizing the edge feature of the target edge and the at least one correlation result, to update the edge feature of the target edge. In this method, an optimal precoding strategy can be learned, and a problem of hybrid digital-analog precoding can be resolved.

FIG. 5

S501 — Obtain channel state information between at least one network device and at least one terminal device

S502 — Process the channel state information by using a GNN, to obtain precoding between the at least one network device and the at least one terminal device, where the GNN includes a first non-linear unit and a second non-linear unit, where the first non-linear unit is configured to calculate a correlation between an edge feature of a target edge in graph data used by the GNN and an edge feature of each edge on each target node, to obtain at least one correlation result, the target node includes a node connected to the target edge and a node of a same type as the node connected to the target edge, and the second non-linear unit is configured to aggregate a result obtained by summarizing the edge feature of the target edge and the at least one correlation result, to update the edge feature of the target edge

Processed by Luminess, 75001 PARIS (FR)

EP 4 716 107 A1

## Description

### TECHNICAL FIELD

This application relates to the field of artificial intelligence (artificial intelligence, AI) technologies, and in particular, to an information processing method and apparatus.

### BACKGROUND

Wireless strategy optimization is an important problem in wireless communication. Precoding is used as an example. Precoding in a wireless communication system can effectively improve system energy efficiency and spectral efficiency. A wireless environment and a communication system configuration dynamically change over time. This causes input and output dimensions of the wireless strategy optimization problem to change over time. Therefore, a dimension-scalable graph neural network (graph neural network, GNN) may be used to learn strategies such as precoding in the wireless environment. However, a current GNN has poor generalization performance and cannot be used to resolve a problem related to hypergraph. Consequently, it is difficult to learn an optimal precoding strategy and the like by using the current GNN, and a problem such as hybrid digital-analog precoding cannot be resolved.

### SUMMARY

This application provides an information processing method, an information processing apparatus, a processing apparatus, a computer storage medium, and a computer program product, so that an optimal precoding strategy can be learned by using a GNN, and a problem of hybrid digital-analog precoding can be resolved.

According to a first aspect, this application provides an information processing method, including: obtaining channel state information between at least one network device and at least one terminal device; and processing the channel state information by using a graph neural network GNN, to obtain precoding between the at least one network device and the at least one terminal device, where the GNN includes a first non-linear unit and a second non-linear unit. The first non-linear unit is configured to calculate a correlation between an edge feature of a target edge in graph data used by the GNN and an edge feature of each edge on each target node, to obtain at least one correlation result, and the target node includes a node connected to the target edge and a node of a same type as the node connected to the target edge. The second non-linear unit is configured to aggregate a result obtained by summarizing the edge feature of the target edge and the at least one correlation result, to update the edge feature of the target edge.

In this way, after the channel state information between the at least one network device and the at least one terminal device is obtained, the channel state information is processed by using the foregoing GNN, to obtain the precoding of the at least one network device and the at least one terminal device. In a solving process in which the GNN is used, mutual impact between different edges in the graph data is considered, and the edge feature of the target edge (that is, a to-be-solved edge) is directly used for solving. Therefore, when the GNN is used to solve the precoding, an optimal precoding strategy may be obtained through solving. In addition, an input of the first non-linear unit in the two non-linear units is a feature of an edge instead of a specific matrix, so that the first non-linear unit is not restricted by a two-dimensional matrix. Therefore, the GNN may be used in a hypergraph, and further, a problem of hybrid digital-analog precoding can be resolved by using the GNN for solving. For example, when a graph constructed by using the graph data used by the GNN is a hypergraph, an edge on each node included in the graph data may be referred to as a hyperedge.

In a possible implementation, the precoding is digital precoding. In this case, the graph data includes a first-type node corresponding to the network device, a second-type node corresponding to the terminal device, and an edge connecting the first-type node and the second-type node.

In a possible implementation, the precoding is hybrid digital-analog precoding. In this case, the graph data includes a first-type node corresponding to an antenna in the network device, a second-type node corresponding to an antenna in the terminal device, a third-type node corresponding to a radio frequency link on the network device, and an edge connecting the first-type node, the second-type node, and the third-type node. An initial feature of an edge in the graph data is obtained based on the channel state information. For example, the initial feature of the edge in the graph data may be obtained by performing a dimensionality increase operation on the channel state information.

In a possible implementation, both the first non-linear unit and the second non-linear unit are implemented by using a neural network in the GNN. In this way, functions implemented by the first non-linear unit and the second non-linear unit are not obtained through derivation by using a fixed formula, but are obtained by using the NN through training by using the training data. Therefore, the two non-linear units can adapt to more extensive scenarios, and a generalization capability of the GNN is improved.

In a possible implementation, both the first non-linear unit and the second non-linear unit have (n-1)-dimensional permutation equivariance, and n is a quantity of types of nodes in the graph data. In this way, during solving of a wireless strategy optimization problem in the wireless communication system, the GNN can have dimension scalability and low training complexity.

According to a second aspect, this application provides an information processing apparatus, including a processing module. The processing module is configured to: obtain channel state information between at least one network device and at least one terminal device; and process the channel state information by using a graph neural network GNN, to obtain precoding between the at least one network device and the at least one terminal device, where the GNN includes a first non-linear unit and a second non-linear unit. The first non-linear unit is configured to calculate a correlation between an edge feature of a target edge in graph data used by the GNN and an edge feature of each edge on each target node, to obtain at least one correlation result, and the target node includes a node connected to the target edge and a node of a same type as the node connected to the target edge. The second non-linear unit is configured to aggregate a result obtained by summarizing the edge feature of the target edge and the at least one correlation result, to update the edge feature of the target edge. For example, the processing module may be a processor or a processing circuit. For example, when the information processing apparatus is a chip, the processing module may be the processing circuit.

In a possible implementation, the precoding is digital precoding. The graph data includes a first-type node corresponding to the network device, a second-type node corresponding to the terminal device, and an edge connecting the first-type node and the second-type node.

In a possible implementation, the precoding is hybrid digital-analog precoding. The graph data includes a first-type node corresponding to an antenna in the network device, a second-type node corresponding to an antenna in the terminal device, a third-type node corresponding to a radio frequency link on the network device, and an edge connecting the first-type node, the second-type node, and the third-type node. An initial feature of an edge in the graph data is obtained based on the channel state information.

In a possible implementation, both the first non-linear unit and the second non-linear unit are implemented by using a neural network in the GNN.

In a possible implementation, both the first non-linear unit and the second non-linear unit have (n-1)-dimensional permutation equivariance, and n is a quantity of types of nodes in the graph data.

According to a third aspect, this application provides an information processing method, including: obtaining graph data obtained based on a wireless communication system; and processing the graph data by using a GNN, to obtain a processing result. The GNN performs information processing by using the first non-linear unit and the second non-linear unit. The first non-linear unit is configured to calculate a correlation between an edge feature of a target edge in the graph data used by the GNN and an edge feature of each edge on each target node, to obtain at least one correlation result, and the target node includes a node connected to the target edge and a node of a same type as the node connected to the target edge. The second non-linear unit is configured to aggregate a result obtained by summarizing the edge feature of the target edge and the at least one correlation result, to update the edge feature of the target edge.

In this way, after the graph data in the wireless communication system is obtained, the graph data is processed by using the foregoing GNN, to obtain a required processing result. In a solving process in which the GNN is used, mutual impact between different edges in the graph data is considered, and the edge feature of the target edge (that is, a to-be-solved edge) is directly used for solving. Therefore, when the GNN is used to solve the precoding, an optimal processing result may be obtained through solving. In addition, an input of the first non-linear unit in the two non-linear units is a feature of an edge instead of a specific matrix, so that the first non-linear unit is not restricted by a two-dimensional matrix. Therefore, the first non-linear unit may be used in a hypergraph.

In a possible implementation, both the first non-linear unit and the second non-linear unit are implemented by using a neural network in the GNN.

In a possible implementation, both the first non-linear unit and the second non-linear unit have (n-1)-dimensional permutation equivariance, and n is a quantity of types of nodes in the graph data.

According to a fourth aspect, this application provides an information processing apparatus, including a processing module. The processing module may be configured to: obtain graph data obtained based on a wireless communication system, and process the graph data by using a GNN, to obtain a processing result. The GNN performs information processing by using the first non-linear unit and the second non-linear unit. The first non-linear unit is configured to calculate a correlation between an edge feature of a target edge in the graph data used by the GNN and an edge feature of each edge on each target node, to obtain at least one correlation result, and the target node includes a node connected to the target edge and a node of a same type as the node connected to the target edge. The second non-linear unit is configured to aggregate a result obtained by summarizing the edge feature of the target edge and the at least one correlation result, to update the edge feature of the target edge. For example, the processing module may be a processor or a processing circuit. For example, when the information processing apparatus is a chip, the processing module may be the processing circuit.

In a possible implementation, both the first non-linear unit and the second non-linear unit are implemented by using a neural network in the GNN.

In a possible implementation, both the first non-linear unit and the second non-linear unit have (n-1)-dimensional permutation equivariance, and n is a quantity of types of nodes in the graph data.

According to a fifth aspect, this application provides a processing apparatus, including at least one processor, configured to execute a computer program, to implement the method described in the first aspect or the third aspect.

In a possible implementation, the processing apparatus further includes at least one memory. The memory may be configured to store the computer program executed by the processor.

In a possible implementation, the processing apparatus may be a chip or a chip system.

According to a sixth aspect, this application provides a computer-readable storage medium. The computer-readable storage medium stores a computer program, and when the computer program is run on a processor, the processor is enabled to perform the method described in the first aspect or the third aspect.

According to a seventh aspect, this application provides a computer program product. When the computer program product is run on a processor, the processor is enabled to perform the method described in the first aspect or the third aspect.

It may be understood that, for beneficial effects of the second aspect, and the fourth aspect to the seventh aspect, refer to related descriptions in the first aspect and the third aspect. Details are not described herein again.

## BRIEF DESCRIPTION OF DRAWINGS

FIG. 1 is a diagram of an architecture of a wireless communication system according to an embodiment of this application;

FIG. 2 is a diagram of a graph structure obtained based on a wireless communication system according to an embodiment of this application;

FIG. 3 is a diagram of nodes in graph data obtained based on a wireless communication system according to an embodiment of this application;

FIG. 4 is a diagram of data processing effect comparison between a GNN and a conventional GNN according to an embodiment of this application;

FIG. 5 is a schematic flowchart of an information processing method according to an embodiment of this application;

FIG. 6 is a schematic flowchart of another information processing method according to an embodiment of this application;

FIG. 7 is a diagram of a structure of an information processing apparatus according to an embodiment of this application; and

FIG. 8 is a diagram of a structure of a processing apparatus according to an embodiment of this application.

## DESCRIPTION OF EMBODIMENTS

The term "and/or" in the specification describes an association relationship for describing associated objects and represents that three relationships may exist. For example, A and/or B may represent the following three cases: Only A exists, both A and B exist, and only B exists. The character "/" in the specification represents an "or" relationship between the associated objects. For example, A/B represents A or B.

In the specification and the claims in the specification, the terms "first", "second", and the like are intended to distinguish between different objects, but do not indicate a particular order of the objects. For example, a first response message, a second response message, and the like are intended to distinguish between different response messages, but do not indicate a particular order of the response messages.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, the term such as "example" or "for example" used herein is intended to present a related concept in a specific implementation.

In descriptions of embodiments of this application, unless otherwise specified, "a plurality of" means two or more. For example, a plurality of processing units mean two or more processing units, and a plurality of elements mean two or more elements.

First, some technical terms used in embodiments of this application are described.

(1) Permutation equivariance

The permutation equivariance (permutation equivariance, PE) refers to a property, to be specific, a permutation change in a function input leads to a corresponding permutation change in a function output. A solving function of a wireless strategy optimization problem usually has the PE.

The following describes technical solutions provided in embodiments of this application.

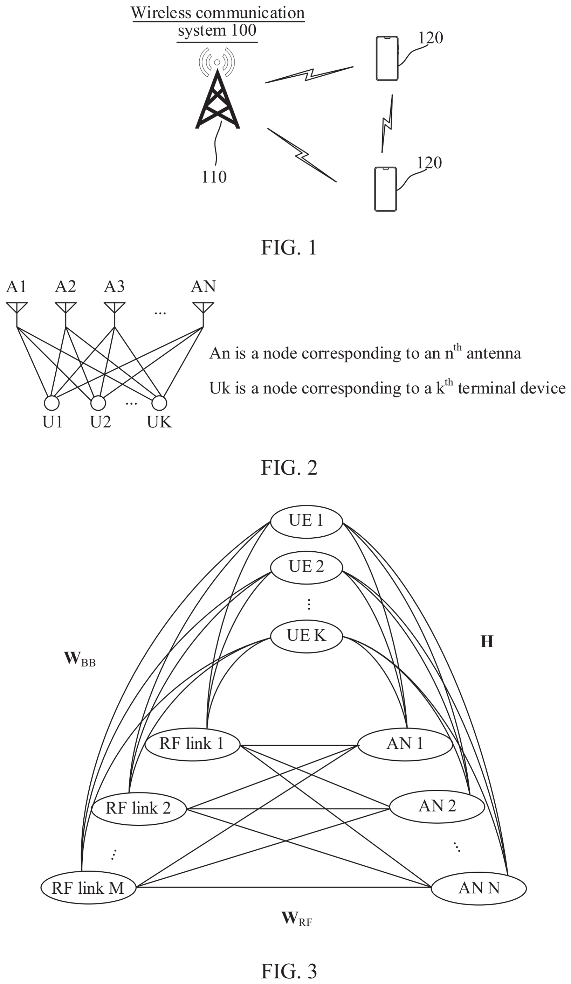

For example, FIG. 1 is a diagram of an architecture of a wireless communication system according to an embodiment of this application. As shown in FIG. 1, the wireless communication system 100 may include a network device 110 and at least one terminal device 120. A wireless communication connection may be established between the network device 110 and each terminal device 120. In addition, a wireless communication connection may also be established between terminal devices 120. This is not limited herein.

The network device 110 may be a base station, a base station controller, a router, or the like. A specific type of the network device 110 is not specifically limited in this embodiment. In some embodiments, the network device 110 may support communication protocols of different standards. For example, the network device 110 may be a base transceiver station (base transceiver station, BTS) in a global system for mobile communications (global system for mobile communications, GSM) or a code division multiple access (code division multiple access, CDMA) system, or may be a radio transceiver (NodeB, NB) in a wideband code division multiple access (wideband code division multiple access, WCDMA) system, or may be an evolved NodeB (evolved NodeB, eNB, or eNodeB) in a long term evolution (long term evolution, LTE) system, or may be a network device in a 5$^{th}$ generation mobile communication technology (5$^{th}$ generation mobile communication technology, 5G) network, or a network device in a 6$^{th}$ generation mobile communication technology (6$^{th}$ generation mobile communication technology, 6G) network or a future network. In another possible scenario, different network nodes may separately implement a part of functions of the base station. For example, the network node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU (or the CU-CP and the CU-UP), the DU, or the RU may have different names, but a person skilled in the art may understand a meaning of the name. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU). Any one of the CU (or the CU-CP or the CU-UP), the DU, and the RU may be implemented by using a software module, a hardware module, or a combination of the software module and the hardware module.

For example, the terminal device 120 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the terminal device 120 is not specially limited in this embodiment.

In the wireless communication system shown in FIG. 1, an example in which the network device 110 has N antennas, there are K terminal devices 120, and the terminal device 120 has a single antenna is used. Channel state information between an n$^{th}$ antenna in the network device 110 and a k$^{th}$ (k=1, 2, ..., or K) terminal device 120 is denoted as $h_{nk}$, where n=1, 2, ..., or N, so that channel state information between the network device 110 and the k$^{th}$ terminal device 120 is $\mathbf{h_k} = [h_{1k}, h_{2k}, ..., h_{Nk}]$, and channel state information between the network device 110 and all the terminal devices 120 is $\mathbf{H} = [\mathbf{h_1}, \mathbf{h_2}, ..., \mathbf{h_N}]$. A graph structure used when precoding is performed by using a GNN may be shown in FIG. 2. In this case, an input of the GNN may be the channel state information $\mathbf{H}$, and an output of the GNN may be a precoding scheme. In FIG. 2, two types of nodes are included: a node corresponding to the antenna in the network device 110 and a node corresponding to the terminal device 120, where $A_n$ represents a node corresponding to the n$^{th}$ (1≤n≤N) antenna in the network device 110, and $U_k$ represents a node corresponding to the k$^{th}$ (1≤k≤K) terminal device. In FIG. 2, a feature (or a representation) of an edge between two nodes at an $l^{th}$ layer in the GNN may be obtained by processing (that is, aggregating and integrating) features of all edges connected to the two nodes at an $(l-1)^{th}$ layer in the GNN by using the GNN. An edge $(n,k)$ between the node $A_n$ corresponding to the n$^{th}$ antenna and the node $U_k$ corresponding to the k$^{th}$ terminal device is used as an example. An output of the edge $(n, k)$ at the $l^{th}$ layer in the GNN is denoted as $\mathbf{d}_{nk}^{(l)}$, so that an output of the edge $(n, k)$ at an $(l + 1)^{th}$ layer in the GNN is:

$$\mathbf{d}_{nk}^{(l+1)} = CB\left(\mathbf{d}_{nk}^{(l)}, PL_{i=1,i\neq n}^{N}\left(q\left(\mathbf{d}_{ik}^{(l)}, \mathbf{P}\right)\right), PL_{j=1,j\neq k}^{K}\left(q\left(\mathbf{d}_{nj}^{(l)}, \mathbf{Q}\right)\right), \mathbf{S}\right) \quad \text{(Formula 1)}$$

$PL(.)$ represents a pooling function, $PL_{i=1,i\neq n}^{N}(\cdot)$ is used to aggregate features of edges, other than the edge

$(n, k)$, that are connected to the node $U_k$, and $PL_{j=1, j \neq k}^{K}(\cdot)$ is used to aggregate features of edges, other than the edge $(n, k)$, that are connected to the node $A_n$. $CB(.)$ represents a combination function, and is used to integrate the output $\mathbf{d}_{nk}^{(l)}$ of the edge $(n, k)$ at the $l^{\text{th}}$ layer, an aggregation result of $PL_{i=1, i \neq n}^{N}(\cdot)$, and an aggregation result of $PL_{j=1, j \neq k}^{K}(\cdot)$. $q(.)$ is used to extract an edge feature of an edge. **P, Q,** and **S** are all to-be-learned or to-be-trained parameters in the GNN.

When $q(.)$ represents a linear function, $CB(.)$ represents a function obtained by combining a linear equation and an activation function $\sigma(\cdot)$, and $PL(.)$ represents a summation function, "Formula 1" may be expressed as:

$$\mathbf{d}_{nk}^{(l+1)} = \sigma(\mathbf{S}\mathbf{d}_{nk}^{(l)} + \mathbf{P} \sum_{i=1, i \neq n}^{N} \mathbf{d}_{ik}^{(l)} + \mathbf{Q} \sum_{j=1, j \neq k}^{K} \mathbf{d}_{nj}^{(l)}) \quad \text{(Formula 2)}$$

Further, according to "Formula 2", it may be obtained that a vector formed by outputs of all edges connected to the $k^{\text{th}}$ terminal device at the $l^{\text{th}}$ layer in the GNN is: $\mathbf{d}_{k}^{(l)} = [\mathbf{d}_{1k}^{(l)}, \mathbf{d}_{2k}^{(l)}, \dots, \mathbf{d}_{Nk}^{(l)}]^{T}$. With reference to "Formula 2", it may be obtained that a vector formed by outputs of all edges connected to the $k^{\text{th}}$ terminal device at the $(l+1)^{\text{th}}$ layer in the GNN is:

$$\mathbf{d}_{k}^{(l+1)} = \sigma\left(\mathbf{V}\mathbf{d}_{k}^{(l)} + \sum_{j=1}^{K} \mathbf{U}\,\mathbf{d}_{j}^{(l)}\right) \triangleq f_{\mathsf{V}}\left(\mathbf{d}_{k}^{(l)}, \sum_{j=1}^{K} \mathbf{d}_{j}^{(l)}\right) \quad \text{(Formula 3)}$$

$$\mathbf{V} = \begin{bmatrix} \mathbf{S} & \mathbf{P} & \cdots & \mathbf{P} \\ \mathbf{P} & \mathbf{S} & \cdots & \mathbf{P} \\ \vdots & \vdots & \ddots & \vdots \\ \mathbf{P} & \mathbf{P} & \cdots & \mathbf{S} \end{bmatrix}, \quad \mathbf{U} = \begin{bmatrix} \mathbf{Q} & 0 & \cdots & 0 \\ 0 & \mathbf{Q} & \cdots & 0 \\ \vdots & \vdots & \ddots & \vdots \\ 0 & 0 & \cdots & \mathbf{Q} \end{bmatrix}. \mathbf{P, Q,}$$ and **S** are all to-be-learned or to-be-trained parameters in the GNN.

In "Formula 3", inputs of the function $f_{\mathsf{V}}$ are $\mathbf{d}_{k}^{(l)}$ and $\sum_{j=1}^{K} \mathbf{d}_{j}^{(l)}$. It can be learned that, in "Formula 3", features of all edges are simply summed, and then a result obtained through summation is integrated with an edge feature of a to-be-solved edge, to complete updating the edge feature of the to-be-solved edge. In a wireless communication system, signals generated by different devices often affect each other. Consequently, in graph data constructed based on the wireless communication system, different edges often affect each other. However, in a manner of solving the precoding according to "Formula 3", a correlation between different edges is not considered. Consequently, it is difficult to obtain an optimal precoding strategy through solving in this manner.

In addition, in addition to obtaining the output (that is, the feature) of the edge $(n, k)$ at the $(l+1)^{\text{th}}$ layer in the GNN by using "Formula 3", the output may be further obtained through an inverse operation of a two-dimensional matrix and by performing mathematical derivation on the channel state information **H** and a pseudo-inverse of **H** by using a first-order Taylor formula. The output of the edge $(n, k)$ at the $(l+1)^{\text{th}}$ layer in the GNN obtained in this manner is:

$$\mathbf{d}_{nk}^{(l+1)} = 2\mathbf{d}_{nk}^{(l)} - \sum_{j=1}^{K} a_{jk}^{(l)} \mathbf{d}_{nk}^{(l)} \quad \text{(Formula 4)}$$

$a_{jk}^{(l)} = \mathbf{h}_{\mathbf{j}}^{\mathbf{T}} \cdot \mathbf{d}_{j}^{(l)} \cdot \mathbf{h}_{\mathbf{j}}^{\mathbf{T}}$ is obtained by performing a transpose operation on channel state information $\mathbf{h_j}$ between the network device 110 and a $j^{\text{th}}$ terminal device 120. $\mathbf{d}_{j}^{(l)} = [\mathbf{d}_{1j}^{(l)}, \dots, \mathbf{d}_{Nj}^{(l)}]^{\mathbf{T}}$. $\mathbf{d}_{j}^{(l)}$ represents a vector formed by outputs of all edges connected to the $j^{\text{th}}$ terminal device at the $l^{\text{th}}$ layer in the GNN. $\sum_{j=1}^{K} a_{jk}^{(l)} \mathbf{d}_{nk}^{(l)}$ may be understood as a function for aggregating features of edges, other than the edge $(n, k)$, that are separately connected to the node $A_n$ and the node $U_k$. $2\mathbf{d}_{nk}^{(l)} - \sum_{j=1}^{K} a_{jk}^{(l)} \mathbf{d}_{nk}^{(l)}$ may be understood as a function for combining an output $\mathbf{d}_{nk}^{(l)}$ of the edge $(n,$

$k$) at the $l$th layer and an aggregation result of $\sum_{j=1}^{K} a_{jk}^{(l)} \mathbf{d}_{nk}^{(l)}$ .

Further, according to "Formula 4", it may be obtained that a vector formed by outputs of all edges connected to the $k$th terminal device at the $l$th layer in the GNN is: $\mathbf{d}_k^{(l)} = [\mathbf{d}_{1k}^{(l)}, \mathbf{d}_{2k}^{(l)}, \ldots, \mathbf{d}_{Nk}^{(l)}]^T$ . With reference to "Formula 4", it may be obtained that a vector formed by outputs of all edges connected to the $k$th terminal device at the $(l + 1)$th layer in the GNN is:

$$\mathbf{d}_k^{(l+1)} = 2\mathbf{d}_k^{(l)} - \sum_{j=1}^{K} (\mathbf{h}_j^{\mathsf{H}} \mathbf{d}_k^{(l)}) \mathbf{d}_j^{(l)} \quad \text{(Formula 5)}$$

In "Formula 5", because $\mathbf{d}_{nk}^{(l+1)}$ is derived based on a matrix inversion operation and a specific mathematical formula, this manner is applicable only to a two-dimensional graph. However, in a hypergraph, a feature of an edge is a tensor with a higher dimension. Therefore, "Formula 5" is not applicable to a hypergraph formed by high-dimensional tensors. In addition, in a solving process of Formula 5, $\mathbf{d}_k^{(l)}$ needs to be transformed by using $\mathbf{h}_j^{\mathsf{H}}$ . This causes subsequently used $\mathbf{d}_k^{(l)}$ to be transformed. Consequently, it is difficult to directly use initial $\mathbf{d}_k^{(l)}$ for solving, and it is difficult to obtain the optimal precoding strategy through solving.

In view of this, an embodiment of this application provides a dimension-generalizable GNN, including two non-linear units. Dimension generalizability means a capability of processing a plurality of dimensions, and/or a capability of processing a variable quantity of nodes in graph data. A first non-linear unit in the two non-linear units may be configured to calculate a correlation between an edge feature of a target edge in the graph data used by the GNN and an edge feature of each edge on each target node, to obtain at least one correlation result. The target node includes a node connected to the target edge and a node of a same type as the node connected to the target edge. For example, still with reference to FIG. 2, when the target edge is an edge ($A_1$, $U_1$), the target node is a node $U_1$, $U_2$, ..., or $U_K$ or a node $A_1$, $A_2$, ..., or $A_N$. A second non-linear unit in the two non-linear units may be configured to aggregate a result obtained by summarizing the edge feature of the target edge and the at least one correlation result, to update the edge feature of the target edge. In this way, when the GNN is used for solving, mutual impact between different edges may be considered, and the edge feature of the target edge may be directly used for solving, so that an optimal precoding strategy can be obtained through solving when the GNN is used to solve precoding. In addition, an input of the first non-linear unit in the two non-linear units is a feature of an edge, and does not have $\mathbf{h}_j^{\mathsf{H}}$ in "Formula 5", so that the first non-linear unit is not restricted by a two-dimensional matrix. Therefore, the first non-linear unit may be used in a hypergraph, and further, a problem of hybrid digital-analog precoding may be resolved.

The following describes, by using two scenarios of solving a precoding scheme, a structure and a design principle of the dimension-generalizable GNN provided in this embodiment of this application.

(1) Scenario of digital precoding solving

In the wireless communication system shown in FIG. 1, when a precoding problem is digital precoding, the graph data used by the GNN includes a first-type node corresponding to the network device 110, a second-type node corresponding to the terminal device 120, and an edge connecting the first-type node and the second-type node. For example, the first-type node corresponding to the network device 110 may be a node corresponding to the antenna in the network device 110, or a node corresponding to a radio frequency link on the network device 110. In addition, a graph structure constructed based on the graph data may be shown in FIG. 2. In FIG. 2, the node A1 to the node AN may be first-type nodes corresponding to the network device 110, and the node U1 to the node Uk may be second-type nodes corresponding to the terminal device 120.

In the case of this precoding problem, when an antenna order of the network device 110 is changed by a permutation matrix $\Pi_{\mathbf{AN}}$, and an order of terminal devices 120 is changed by a permutation matrix $\Pi_{\mathbf{UE}}$, channel state information $\mathbf{H}$ between the network device 110 and all terminal devices is changed to $\Pi_{\mathrm{AN}}^{\mathrm{T}} \mathbf{H} \Pi_{\mathrm{UE}}$ . In this case, a row and a column of an optimal precoding matrix also change accordingly, but values remain unchanged. Therefore, in this case, a precoding strategy satisfies the following permutation equivariance: $\Pi_{\mathrm{AN}}^{\mathrm{T}} \overline{W} \Pi_{\mathrm{UE}} = F_d(\Pi_{\mathrm{AN}}^{\mathrm{T}} \mathbf{H} \Pi_{\mathrm{UE}}) \cdot \overline{W}$

represents optimal precoding, $F_d$(.) represents mapping (that is, a function) from **H** to $\overline{W}$, and $F_d$(.) has permutation equivariance. Fitting is performed on $F_d$(.) by using the GNN, so that digital precoding obtained through solving can be approximate to the optimal precoding, and the digital precoding strategy obtained through solving by using the GNN can optimize system performance.

It can be learned from the foregoing analysis that, the GNN used to solve the digital precoding strategy needs to satisfy the permutation equivariance. Still with reference to FIG. 2, the digital precoding obtained through solving is expressed as $\mathbf{W} = [\mathbf{w}_1, \ldots, \mathbf{w}_K]^T \in \mathbb{C}^{K \times N}$, where $\mathbf{w}_k = [w_{1k}, \ldots, w_{Nk}]^T \in \mathbb{C}^{N \times 1}$, and $\mathbf{w}_k$, represents a precoding vector of the $k^{th}$ terminal device. In addition, channel state information between the $n^{th}$ antenna and the $k^{th}$ terminal device is denoted as $h_{nk}$, and is used as an initial feature of the edge $(n, k)$. After a plurality of rounds of processing are performed on the initial feature of the edge $(n, k)$ by using the GNN, an output by the GNN for the edge $(n, k)$ (that is, a feature of the edge $(n, k)$) is an element $w_{nk}$ in the digital precoding **W.** The precoding vector of the $k^{th}$ terminal device obtained by using $w_{nk}$ is $\mathbf{w}_k = [w_{1k}, \ldots, w_{Nk}]^T \in \mathbb{C}^{N \times 1}$.

When digital precoding is performed by using the GNN, a feature vector formed by features output at the $l^{th}$ layer by all edges connected to the node corresponding to the $k^{th}$ terminal device is denoted as $\mathbf{d}_k^{(l)}$. Therefore, a feature vector formed by features output at the $(l + 1)^{th}$ layer by all the edges connected to the node corresponding to the $k^{th}$ terminal device is:

$$\mathbf{d}_k^{(l+1)} = f(\mathbf{d}_k^{(l)}, \textstyle\sum_{j=1}^K q(\mathbf{d}_k^{(l)}, \mathbf{d}_j^{(l)})) \quad (\text{Formula } 6)$$

In "Formula 6", $q$(.) represents a processing function, and is implemented by the foregoing first non-linear unit. $f$(.) represents a combination function, and is implemented by the foregoing second non-linear unit. $q$(.) and $f$(.) both represent non-linear functions. Both $q$(.) and $f$(.) may be implemented by using a neural network (neural network, NN) in the GNN. In addition, both $q$(.) and $f$(.) have one-dimensional permutation equivariance, so that the learned precoding strategy also satisfies the PE with respect to an antenna order permutation, in other words, both $q$(.) and $f$(.) satisfy the following form:

$$y_n = \psi(x_n, \textstyle\sum_{i=1}^N \xi(x_n, x_i)) \quad (\text{Formula } 7)$$

In "Formula 7", $\psi$(.) and $\xi$(.) both represent non-linear functions, and may both be obtained through NN learning. "Formula 7" may be understood as a one-dimensional PE (one-dimensional PE, 1D-PE) function for mapping $\mathbf{x} = [x_1, \ldots, x_N]^T$ to $\mathbf{y} = [y_1, \ldots, y_N]^T$.

After L rounds of processing are performed, by using the GNN and "Formula 6", on initial features, $\mathbf{h_k} = [h_{1k}, h_{2k}, \ldots, h_{Nk}]$, of all the edges connected to the node corresponding to the $k^{th}$ terminal device, a result output by the GNN is:

$\mathbf{d}_k^{(L)} = \mathbf{w}_k$, that is, a precoding vector of the $k^{th}$ terminal device is obtained. $\mathbf{h_k}$ represents a feature corresponding channel state information between all antennas and the $k^{th}$ terminal device. After L rounds of processing are performed, by using the GNN and "Formula 6", on initial features of all edges adjacent to a node corresponding to another terminal device, a precoding vector of the another terminal device may be obtained, to obtain digital precoding.

(2) Scenario of hybrid digital-analog precoding solving

In the wireless communication system shown in FIG. 1, when a precoding problem is hybrid precoding, graph data used by the GNN includes a first-type node corresponding to an antenna in a network device, a second-type node corresponding to an antenna in a terminal device, a third-type node corresponding to a radio frequency (radio frequency, RF) link on the network device, and an edge connecting the first-type node, the second-type node, and the third-type node. In this case, a graph constructed based on the graph data may be a hypergraph, and in the hypergraph, the edge connecting the first-type node, the second-type node, and the third-type node may be referred to as a hyperedge. For example, in this case, nodes included in the graph data may be shown in FIG. 3. In FIG. 3, first-type nodes are an AN 1 to an AN N, second-type nodes are UE 1 to UE K, and third-type nodes are an RF link 1 to an RF link M. In FIG. 3, information between a terminal device and an antenna may be channel state information **H,** information between an antenna and an RF link may be analog precoding $W_{RF}$, and information between a terminal device and an RF link may be digital precoding $W_{BB}$.

Similar to the case in which the precoding problem is the digital precoding, when an antenna order of the network device 110 is changed by a permutation matrix $\Pi_{AN}$, an order of terminal devices is changed by a permutation matrix $\Pi_{UE}$,

and an order of RF links is changed by a matrix $\Pi_{\text{RF}}$, the channel state information **H** is changed to $\Pi_{\text{AN}}^{\text{T}} \mathbf{H} \Pi_{\text{UE}}$. In this case, rows and columns of an optimal digital precoding matrix and an analog precoding matrix also change accordingly, but values remain unchanged. Therefore, in this case, a precoding strategy satisfies the following permutation equivariance: $\left\{ \Pi_{\text{RF}}^{\text{T}} \overline{W}_{BB} \Pi_{\text{UE}}, \Pi_{\text{AN}}^{\text{T}} \overline{W}_{RF} \Pi_{\text{RF}} \right\} = F_h(\Pi_{\text{AN}}^{\text{T}} \mathbf{H} \Pi_{\text{UE}})$. $\overline{W}_{BB}$ represents optimal digital precoding, $\overline{W}_{RF}$ represents optimal analog precoding, $F_h(.)$ represents mapping (that is, a function) from **H** to $\overline{W}_{BB}$ and $\overline{W}_{RF}$, and $F_h(.)$ has permutation equivariance. Fitting is performed on $F_h(.)$ by using the GNN, so that hybrid digital-analog precoding obtained through solving can be approximate to the optimal hybrid digital-analog precoding, and the hybrid digital-analog precoding strategy obtained through solving by using the GNN can optimize system performance.

Further, in a hypergraph corresponding to the hybrid digital-analog precoding problem, a hyperedge connecting an antenna n, an RF link m, and a terminal device k may be denoted as a hyperedge (n, m, k), where $1 \le n \le N$, N represents a quantity of antennas, $1 \le m \le M$, M represents a quantity of RF links, $1 \le k \le K$, and K represents a quantity of terminal devices. When hybrid precoding is performed by using the GNN, the channel state information **H** between the network device 110 and all terminal devices 120 may be first increased into a tensor whose dimension is $N \times M \times K$. For example, channel state information whose dimension is $N \times K$ is replicated M times in a new dimension. Then, the obtained tensor whose dimension is $N \times M \times K$ is input into the GNN, to process the tensor by using the GNN. After the tensor whose dimension is $N \times M \times K$ is input into the GNN, outputs of all hyperedges at the $l^{\text{th}}$ layer of the GNN form a three-dimensional tensor:

$\mathbf{D}^{(l)} = [d_{nmk}^{(l)}]^{N \times M \times K}$, where $d_{nmk}^{(l)}$ represents an output of the hyperedge (n, m, k).

A matrix formed by outputs of all hyperedges connected to the $k^{\text{th}}$ terminal device is expressed as $\mathbf{D}_k^{(l)} \in \mathbb{R}^{N \times M}$, and the matrix is a slice of an output (that is, $\mathbf{D}^{(l)}$) at the $l^{\text{th}}$ layer in the GNN in a terminal device dimension. In this case, outputs of all hyperedges connected to the node corresponding to the $k^{\text{th}}$ terminal device at the $(l + 1)^{\text{th}}$ layer are:

$$\mathbf{D}_k^{(l+1)} = \bar{f}(\mathbf{D}_k^{(l)}, \sum_{j=1}^{K} \bar{q}(\mathbf{D}_k^{(l)}, \mathbf{D}_j^{(l)})) \quad \text{(Formula 8)}$$

In "Formula 8", $\bar{q}(.)$ represents a processing function, and is implemented by the foregoing first non-linear unit. $\bar{f}(.)$ represents a combination function, and is implemented by the foregoing second non-linear unit. Both $\bar{q}(.)$ and $\bar{f}(.)$ may be implemented by using an NN in the GNN. In addition, both $\bar{q}(.)$ and $\bar{f}(.)$ have two-dimensional permutation equivariance, so that the learned strategy also satisfies the PE with respect to an antenna order permutation and an RF link order permutation, in other words, both $\bar{q}(.)$ and $\bar{f}(.)$ satisfy the following form:

$$\mathbf{y}_m = \bar{\psi}(\mathbf{x}_m, \sum_{i=1}^{M} \bar{\xi}(\mathbf{x}_m, \mathbf{x}_i)) \quad \text{(Formula 9)}$$

In "Formula 9", $\bar{\psi}(.)$ and $\bar{\xi}(.)$ both represent non-linear functions, and may both be obtained through NN learning. "Formula 9" may be understood as a 2D-PE function for mapping $\mathbf{X} = [\mathbf{x}_1, \cdots, \mathbf{x}_M]^{\text{T}} \in \mathbb{R}^{N \times M}$ to $\mathbf{y} = [\mathbf{y}_1, \cdots, \mathbf{y}_M]^{\text{T}} \in \mathbb{R}^{N \times M}$. An input and an output of "Formula 9" are two-dimensional matrices. In "Formula 9", both $\bar{\psi}(.)$ and $\bar{\xi}(.)$ satisfy the 1D-PE with respect to the antenna order permutation, and both have the form of the foregoing "formula 7", so that the learned strategy also satisfies the PE with respect to the antenna order permutation or the RF link order permutation.

After L rounds of processing are performed on the channel state information by using the GNN and "Formula 8", a result output by the GNN is: $\mathbf{D}^{(L)} = [d_{nmk}^{(L)}]^{N \times M \times K}$, that is, a hybrid precoding scheme is obtained.

It can be learned from the foregoing "Formula 8" and "Formula 9" that, to design a GNN that satisfies equivariance with respect to a terminal device order permutation, the antenna order permutation, and the RF link order permutation, each terminal device, all RF links, and all antennas may be first considered as a whole, to design a function (that is, "Formula 8") that satisfies the equivariance with respect to the terminal device order permutation. Then, the processing function and the combination function in "Formula 8" are designed, to satisfy the equivariance with respect to the RF link order permutation (that is, "Formula 9"). When the processing function and the combination function in "Formula 8" are designed, each RF link and all antennas may be considered as a whole, to design a function (that is, "Formula 9") that satisfies the equivariance with respect to the RF link order permutation. Finally, in the designed function that satisfies the equivariance with respect to the RF link order permutation, a design may be further performed, to satisfy the equivariance with respect to the antenna order permutation (that is, "Formula 7").

It can be learned from the descriptions of the foregoing two scenarios that a GNN that satisfies an n-dimensional PE property has a "recursive" idea, where n is a positive integer, and is independent of n in the foregoing $n^{th}$ antenna. Specifically, one dimension (for example, the terminal device dimension) is first selected from an n-dimensional tensor (for example, the output $\mathbf{D}^{(l)}$ at the $l^{th}$ layer) output by each layer, and a composite function (that is, the form of "Formula 8") formed by "a processing function, a pooling function (for example, summation), and a combination function" is used, to obtain a function that satisfies a permutation equivariance property with respect to the dimension. The processing function and the combination function need to satisfy (n-1)-D-PE with respect to the remaining n-1 dimensions. To satisfy the permutation equivariance, another dimension (for example, an RF link dimension) is selected from the remaining dimensions, and the composite function formed by "the processing function, the pooling function, and the combination function" continues to be used, to obtain a function that satisfies a permutation equivariance property with respect to the dimension. The rest is deduced by analogy, until the n dimensions all have the PE property. In addition, all functions designed in the GNN are non-linear functions.

In addition, it may be learned from the foregoing two scenarios of solving the precoding scheme that an update function used by the GNN provided in this embodiment of this application is:

$$\overline{\mathbf{D}}_k^{(l+1)} = F(\overline{\mathbf{D}}_k^{(l)}, \sum_{j=1}^{K} Q(\overline{\mathbf{D}}_k^{(l)}, \overline{\mathbf{D}}_j^{(l)})) \ \ (\text{Formula 10})$$

In "Formula 10", $\overline{\mathbf{D}}_k^{(l+1)}$ represents a vector, a matrix, or a tensor formed by outputs, at the $(l+1)^{th}$ layer in the GNN, of all edges connected to the $k^{th}$ node in the graph data used by the GNN. $F(.)$ represents a non-linear function, is implemented by the foregoing second non-linear unit, and has (n-1)-dimensional PE, where n is a quantity of types of nodes in the graph data used by the GNN. $Q(.)$ represents a non-linear function, is implemented by the foregoing first non-linear unit, and also has (n-1)-dimensional PE.

The following uses precoding as an example to describe, through simulation, beneficial effects of the dimension-generalizable GNN provided in this embodiment.

For example, a scenario in which a base station including N=16 antennas serves K single-antenna mobile phones is considered, and a signal-to-noise ratio is: $P_{max}/\sigma^2 = 10$. $P_{max}$ represents maximum power of a signal, and $\sigma^2$ represents noise power. To learn the precoding strategy, the GNN is trained in an unsupervised manner. All simulation results are obtained by using a computer with a 14-core Intel i9-9940X CPU, an Nvidia RTX 3080Ti GPU, and a 64 GB memory. An input in a training and testing sample is generated by an independent Rayleigh distribution channel, to be specific, an element in the channel state information **H** follows complex Gaussian distribution CN(0, 1). Because the unsupervised manner is used for training, a label does not need to be generated as an expected output of each sample. Table 1 shows comparison between a network structure of an RGNN (that is, the dimension-generalizable GNN provided in this embodiment) and a network structure of a conventional GNN (that is, a GNN used in a related technology).

Table 1

| Network | Quantity of hidden layers | Quantity of nodes at the hidden layer | Initial learning rate | Activation function |
|---|---|---|---|---|
| RGNN | 5 | [16, 32, 32, 32, 16] | 0.001 | Tanh |
| Traditional GNN | 4 | [64, 512, 512, 64] | 0.001 | Relu |

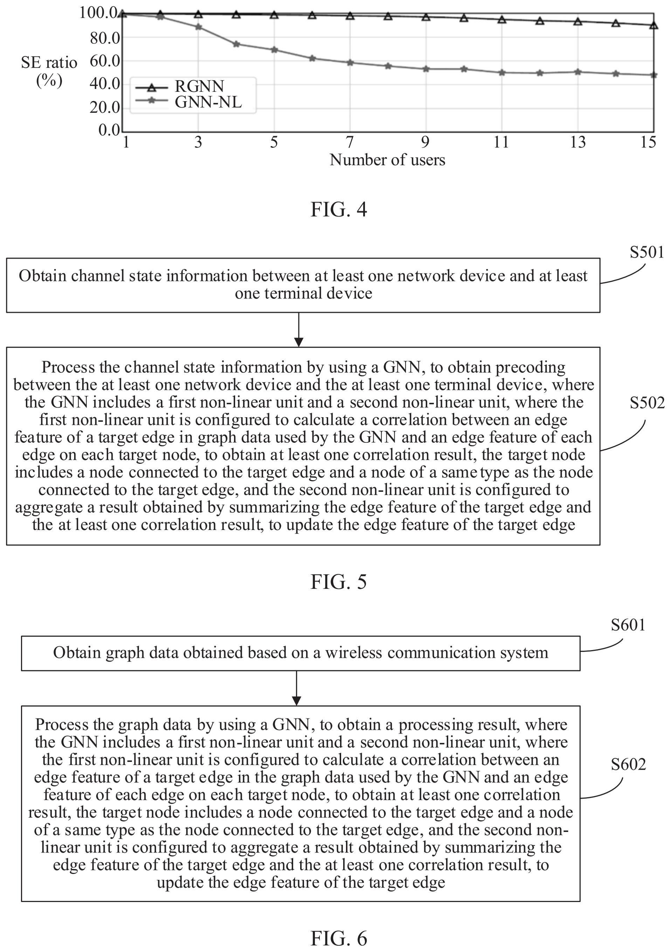

Simulation is performed based on the network structures shown in Table 1. When a quantity of mobile phones changes, performance comparison between the two GNNs may be shown in FIG. 4. In FIG. 4, GNN-NL refers to the conventional GNN in Table 1. It can be learned from FIG. 4 that, compared with performance of the conventional GNN, when a quantity of users changes, performance of the dimension-generalizable GNN provided in this embodiment can remain more than 90% of performance of an optimal solution, but the performance of the conventional GNN decreases significantly.

The foregoing describes the structure and the design principle of the dimension-generalizable GNN provided in this embodiment of this application. The following describes, based on the foregoing content, an information processing method provided in an embodiment of this application. In the information processing method, data processing is mainly performed by using the foregoing GNN.

For example, FIG. 5 is a schematic flowchart of an information processing method according to an embodiment of this application. It may be understood that the method may be performed by any apparatus, device, platform, or device cluster having computing and processing capabilities. As shown in FIG. 5, the information processing method may include the following steps.

S501: Obtain channel state information between at least one network device and at least one terminal device.

In this embodiment, the channel state information between the at least one network device and the at least one terminal device may be calculated by using, but not limited to, a channel estimation technology.

S502: Process the channel state information by using a GNN, to obtain precoding between the at least one network device and the at least one terminal device, where the GNN includes a first non-linear unit and a second non-linear unit, where the first non-linear unit is configured to calculate a correlation between an edge feature of a target edge in graph data used by the GNN and an edge feature of each edge on each target node, to obtain at least one correlation result, the target node includes a node connected to the target edge and a node of a same type as the node connected to the target edge, and the second non-linear unit is configured to aggregate a result obtained by summarizing the edge feature of the target edge and the at least one correlation result, to update the edge feature of the target edge.

In this embodiment, after the channel state information is obtained, the channel state information may be input into the GNN, so that the channel state information is processed by using the GNN, to obtain a precoding scheme between the at least one network device and the at least one terminal device. The GNN used in this information processing method may be the foregoing GNN. For example, the first non-linear unit may implement the non-linear function $Q(.)$ in the foregoing "Formula 10", and the second non-linear unit may implement the non-linear function $F(.)$ in the foregoing "Formula 10".

In a possible implementation, precoding obtained through solving is digital precoding. In this case, the graph data used by the GNN may include a first-type node corresponding to the network device, a second-type node corresponding to the terminal device, and an edge connecting the first-type node and the second-type node. An initial feature of an edge in the graph data may be channel state information between the network device and the terminal device in a wireless communication system. For example, the node corresponding to the network device may include a node corresponding to an antenna in the network device or a node corresponding to a radio frequency link on the network device.

In another possible implementation, precoding obtained through solving is hybrid digital-analog precoding. In this case, the graph data used by the GNN may include a first-type node corresponding to an antenna in the network device, a second-type node corresponding to an antenna in the terminal device, a third-type node corresponding to a radio frequency link on the network device, and an edge (which may also be referred to as a "hyperedge") connecting the first-type node, the second-type node, and the third-type node. An initial feature of an edge in the graph data may be obtained based on channel state information between the network device and the terminal device in the wireless communication system, for example, may be obtained by performing the foregoing described dimensionality increase operation on the channel state information.

In this way, after the channel state information between the at least one network device and the at least one terminal device is obtained, the channel state information is processed by using the foregoing GNN, to obtain the precoding between the at least one network device and the at least one terminal device. In a solving process in which the GNN is used, mutual impact between different edges in the graph data is considered, and the edge feature of the target edge (that is, a to-be-solved edge) is directly used for solving. Therefore, when the GNN is used to solve the precoding, an optimal precoding strategy may be obtained through solving. In addition, an input of the first non-linear unit in the two non-linear units is a feature of an edge, and does not have $\mathbf{h}_j^H$ in "Formula 5", instead of a specific matrix, so that the first non-linear unit is not restricted by a two-dimensional matrix. Therefore, the GNN may be used in a hypergraph, and further, a problem of hybrid digital-analog precoding can be resolved by using the GNN for solving.

In some embodiments, in the GNN, both the first non-linear unit and the second non-linear unit are implemented by using an NN in the GNN. In this way, the first non-linear unit and the second non-linear unit are not obtained through derivation by using a fixed formula, but are implemented by using the NN. Therefore, the two non-linear units can adapt to more extensive scenarios, and a generalization capability of the GNN is improved.

In addition, in the GNN, both the first non-linear unit and the second non-linear unit have (n-1)-dimensional permutation equivariance, and n is a quantity of types of nodes in the graph data used by the GNN. In this way, during solving a problem in the wireless communication system, the GNN can adapt to a change in an arrangement order of devices in the wireless communication system.

For example, FIG. 6 is a schematic flowchart of another information processing method according to an embodiment of this application. It may be understood that the method may be performed by any apparatus, device, platform, or device cluster having computing and processing capabilities. As shown in FIG. 6, the information processing method may include the following steps.

S601: Obtain graph data obtained based on a wireless communication system.

In this embodiment, the graph data may be pre-constructed based on the wireless communication system. An initial feature of an edge in the graph data may include one or more of pilot information, channel state information, modulation information, encoding information, scheduling information, link quality information, quality of service information (quality of service information, QoS information), spectrum management information, clock and synchronization information, access control information, power control information, network topology information, error control information, message and control signaling, delay information, energy efficiency information, media access control information, and resource allocation information.

S602: Process the graph data by using a GNN, to obtain a processing result, where the GNN includes a first nonlinear unit and a second non-linear unit, where the first non-linear unit is configured to calculate a correlation between an edge feature of a target edge in the graph data used by the GNN and an edge feature of each edge on each target node, to obtain at least one correlation result, the target node includes a node connected to the target edge and a node of a same type as the node connected to the target edge, and the second non-linear unit is configured to aggregate a result obtained by summarizing the edge feature of the target edge and the at least one correlation result, to update the edge feature of the target edge. For example, when the initial feature of the edge in the graph data is the pilot information, the processing result may be a channel estimation result; when the initial feature of the edge in the graph data is modulation, the processing result may be a modulated signal; when the initial feature of the edge in the graph data is the encoding information, the processing result may be an encoded signal; when the initial feature of the edge in the graph data is the scheduling information, the processing result may be a scheduling result or a resource allocation result; when the initial feature of the edge in the graph data is the link quality information, the QoS information, the resource allocation information, the delay information, or the energy efficiency information, the processing result may be a resource allocation result; or when the initial feature of the edge in the graph data is the spectrum management information, the processing result may be a spectrum allocation result.

In this way, after the graph data in the wireless communication system is obtained, the graph data is processed by using the foregoing GNN, to obtain a required processing result. In a solving process in which the GNN is used, mutual impact between different edges in the graph data is considered, and the edge feature of the target edge (that is, a to-be-solved edge) is directly used for solving. Therefore, when the GNN is used to solve a wireless strategy optimization problem, an optimal processing result may be obtained through solving. In addition, an input of the first non-linear unit in the two non-linear units is a feature of an edge, and does not have $\mathbf{h}_j^H$ in "Formula 5", instead of a specific matrix, so that the first non-linear unit is not restricted by a two-dimensional matrix. Therefore, the first non-linear unit may be used in a hypergraph.

It may be understood that sequence numbers of the steps in the foregoing embodiments do not mean an execution order, and the execution order of the processes should be determined based on functions and internal logic of the processes, and should not constitute any limitation on the implementation process of embodiments of this application. In addition, all or a part of any feature in any one of the foregoing embodiments may be freely combined in any manner without a conflict, and the combined technical solution also fall within the scope of this application.

Based on the method in the foregoing embodiment, an embodiment of this application provides an information processing apparatus, configured to perform the information processing method described in FIG. 5.

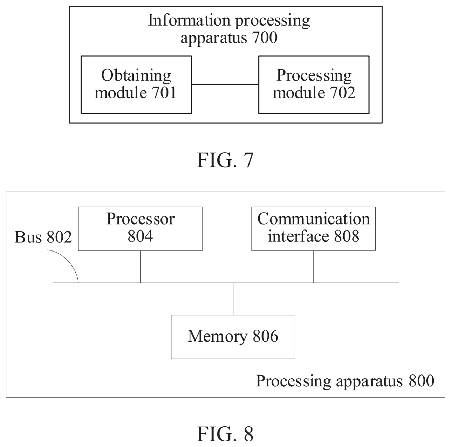

For example, FIG. 7 is a diagram of a structure of an information processing apparatus according to an embodiment of this application. As shown in FIG. 7, the information processing apparatus 700 includes an obtaining module 701 and a processing module 702. The obtaining module 701 is configured to obtain channel state information between at least one network device and at least one terminal device. The processing module 702 is configured to process the channel state information by using a graph neural network GNN, to obtain a precoding scheme between the at least one network device and the at least one terminal device. It may be understood that the obtaining module 701 and the processing module 702 may be combined into one processing module. The GNN includes a first non-linear unit and a second non-linear unit. The first non-linear unit is configured to calculate a correlation between an edge feature of a target edge in graph data used by the GNN and an edge feature of each edge on each target node, to obtain at least one correlation result, and the target node includes a node connected to the target edge and a node of a same type as the node connected to the target edge. The second non-linear unit is configured to aggregate a result obtained by summarizing the edge feature of the target edge and the at least one correlation result, to update the edge feature of the target edge.

In some embodiments, precoding is digital precoding. The graph data includes a first-type node corresponding to the network device, a second-type node corresponding to the terminal device, and an edge connecting the first-type node and the second-type node.

In some embodiments, precoding is hybrid digital-analog precoding. The graph data includes a first-type node corresponding to an antenna in the network device, a second-type node corresponding to an antenna in the terminal device, a third-type node corresponding to a radio frequency link on the network device, and an edge connecting the first-type node, the second-type node, and the third-type node. An initial feature of an edge in the graph data is obtained based on the channel state information.

In some embodiments, both the first non-linear unit and the second non-linear unit are implemented by using a neural network in the GNN.

In some embodiments, both the first non-linear unit and the second non-linear unit have (n-1)-dimensional permutation equivariance, and n is a quantity of types of nodes in the graph data.

It should be understood that the foregoing apparatus is configured to perform the method in the foregoing embodiment. An implementation principle and a technical effect of a corresponding program module in the apparatus are similar to those described in the foregoing method. For a working process of the apparatus, refer to a corresponding process in the foregoing method. Details are not described herein again.

Based on the method in the foregoing embodiment, an embodiment of this application provides an information processing apparatus, configured to perform the information processing method described in FIG. 6. The information processing apparatus includes a processing module. The processing module is configured to: obtain graph data obtained based on a wireless communication system; and process the graph data by using a GNN to obtain a processing result, where the GNN performs information processing by using the first non-linear unit and the second non-linear unit.

The first non-linear unit is configured to calculate a correlation between an edge feature of a target edge in the graph data used by the GNN and an edge feature of each edge on each target node, to obtain at least one correlation result, and the target node includes a node connected to the target edge and a node of a same type as the node connected to the target edge. The second non-linear unit is configured to aggregate a result obtained by summarizing the edge feature of the target edge and the at least one correlation result, to update the edge feature of the target edge.

In some embodiments, both the first non-linear unit and the second non-linear unit are implemented by using a neural network in the GNN.

In some embodiments, both the first non-linear unit and the second non-linear unit have (n-1)-dimensional permutation equivariance, and n is a quantity of types of nodes in the graph data.

It should be understood that the foregoing apparatus is configured to perform the method in the foregoing embodiment. An implementation principle and a technical effect of a corresponding program module in the apparatus are similar to those described in the foregoing method. For a working process of the apparatus, refer to a corresponding process in the foregoing method. Details are not described herein again.

Based on the method in the foregoing embodiment, this application further provides a processing apparatus 800, configured to perform the foregoing method. As shown in FIG. 8, the processing apparatus 800 includes a bus 802, a processor 804, a memory 806, and a communication interface 808. The processor 804, the memory 806, and the communication interface 808 communicate with each other through the bus 802. The processing apparatus 800 may be the foregoing network device or terminal device, or the like. It should be understood that quantities of processors and memories in the processing apparatus 800 are not limited in this application.

The bus 802 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, the bus is represented by using only one line in FIG. 8. However, this does not indicate that there is only one bus or only one type of bus. The bus 804 may include a channel for information transmission between various components (for example, the memory 806, the processor 804, and the communication interface 808) of the processing apparatus 800.

The processor 804 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 806 may include a volatile memory (volatile memory), for example, a random access memory (random access memory, RAM). The processor 804 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 806 stores executable code, and the processor 804 executes the executable code, to separately implement functions of the information processing apparatus 700 in FIG. 7, so as to implement the information processing method in the foregoing embodiment. In other words, the memory 806 stores instructions for performing the information processing method in the foregoing embodiment.

The communication interface 803 uses a transceiver module, for example, but not limited to, a network interface card or a transceiver, to implement communication between the processing apparatus 800 and another device or a communication network.

It may be understood that the structure shown in embodiments of the present invention does not constitute a specific limitation on the processing apparatus 800. In some other embodiments of this application, the processing apparatus 800 may include more or fewer components than those shown in the figure, or some components may be combined, or some components may be split, or different component arrangements may be used. The components shown in the figure may be implemented by hardware, software, or a combination of software and hardware.

Based on the method in the foregoing embodiment, an embodiment of this application provides a computer-readable storage medium. The computer-readable storage medium stores a computer program, and when the computer program is run on a processor, the processor is enabled to perform the method in the foregoing embodiment.

Based on the method in the foregoing embodiment, an embodiment of this application provides a computer program product. When the computer program product is run on a processor, the processor is enabled to perform the method in the foregoing embodiment.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or a part of the foregoing embodiments may be implemented by software, hardware, firmware, or any combination thereof. When the software is used to implement the foregoing embodiments, all or a part of the foregoing embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or other programmable apparatuses. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

**Claims**

1. An information processing method, wherein the method comprises:

   obtaining channel state information between at least one network device and at least one terminal device; and
   processing the channel state information by using a graph neural network GNN, to obtain precoding between the at least one network device and the at least one terminal device, wherein the GNN comprises a first non-linear unit and a second non-linear unit, wherein
   the first non-linear unit is configured to calculate a correlation between an edge feature of a target edge in graph data used by the GNN and an edge feature of each edge on each target node, to obtain at least one correlation result, and the target node comprises a node connected to the target edge and a node of a same type as the node connected to the target edge; and
   the second non-linear unit is configured to aggregate a result obtained by summarizing the edge feature of the target edge and the at least one correlation result, to update the edge feature of the target edge.

2. The method according to claim 1, wherein the precoding is digital precoding; and
   the graph data comprises a first-type node corresponding to the network device, a second-type node corresponding to the terminal device, and an edge connecting the first-type node and the second-type node.

3. The method according to claim 1, wherein the precoding is hybrid digital-analog precoding; and
   the graph data comprises a first-type node corresponding to an antenna in the network device, a second-type node corresponding to an antenna in the terminal device, a third-type node corresponding to a radio frequency link on the network device, and an edge connecting the first-type node, the second-type node, and the third-type node.

4. The method according to claim 3, wherein an initial feature of an edge in the graph data is obtained based on the channel state information.

5. The method according to any one of claims 1 to 4, wherein both the first non-linear unit and the second non-linear unit are implemented by using a neural network in the GNN.

6. The method according to any one of claims 1 to 5, wherein both the first non-linear unit and the second non-linear unit have (n-1)-dimensional permutation equivariance, and n is a quantity of types of nodes in the graph data.

7. An information processing apparatus, comprising:

a processing module, configured to: obtain channel state information between at least one network device and at least one terminal device; and process the channel state information by using a graph neural network GNN, to obtain precoding between the at least one network device and the at least one terminal device, wherein the GNN comprises a first non-linear unit and a second non-linear unit, wherein
the first non-linear unit is configured to calculate a correlation between an edge feature of a target edge in graph data used by the GNN and an edge feature of each edge on each target node, to obtain at least one correlation result, and the target node comprises a node connected to the target edge and a node of a same type as the node connected to the target edge; and
the second non-linear unit is configured to aggregate a result obtained by summarizing the edge feature of the target edge and the at least one correlation result, to update the edge feature of the target edge.

8. The apparatus according to claim 7, wherein the precoding is digital precoding; and
the graph data comprises a first-type node corresponding to the network device, a second-type node corresponding to the terminal device, and an edge connecting the first-type node and the second-type node.

9. The apparatus according to claim 7, wherein the precoding is hybrid digital-analog precoding; and
the graph data comprises a first-type node corresponding to an antenna in the network device, a second-type node corresponding to an antenna in the terminal device, a third-type node corresponding to a radio frequency link on the network device, and an edge connecting the first-type node, the second-type node, and the third-type node.

10. The apparatus according to claim 9, wherein an initial feature of an edge in the graph data is obtained based on the channel state information.

11. The apparatus according to any one of claims 7 to 10, wherein both the first non-linear unit and the second non-linear unit are implemented by using a neural network in the GNN.

12. The apparatus according to any one of claims 7 to 11, wherein both the first non-linear unit and the second non-linear unit have (n-1)-dimensional permutation equivariance, and n is a quantity of types of nodes in the graph data.

13. An information processing method, comprising:

obtaining graph data obtained based on a wireless communication system; and
processing the graph data by using a GNN, to obtain a processing result, wherein the GNN performs information processing by using a first non-linear unit and a second non-linear unit, wherein
the first non-linear unit is configured to calculate a correlation between an edge feature of a target edge in the graph data used by the GNN and an edge feature of each edge on each target node, to obtain at least one correlation result, and the target node comprises a node connected to the target edge and a node of a same type as the node connected to the target edge; and
the second non-linear unit is configured to aggregate a result obtained by summarizing the edge feature of the target edge and the at least one correlation result, to update the edge feature of the target edge.

14. The method according to claim 13, wherein both the first non-linear unit and the second non-linear unit are implemented by using a neural network in the GNN.

15. The method according to claim 13 or 14, wherein both the first non-linear unit and the second non-linear unit have (n-1)-dimensional permutation equivariance, and n is a quantity of types of nodes in the graph data.

16. An information processing apparatus, comprising:

a processing module, configured to: obtain graph data obtained based on a wireless communication system; and process the graph data by using a GNN, to obtain a processing result, wherein the GNN performs information processing by using a first non-linear unit and a second non-linear unit, wherein
the first non-linear unit is configured to calculate a correlation between an edge feature of a target edge in the graph data used by the GNN and an edge feature of each edge on each target node, to obtain at least one correlation result, and the target node comprises a node connected to the target edge and a node of a same type as the node connected to the target edge; and
the second non-linear unit is configured to aggregate a result obtained by summarizing the edge feature of the target edge and the at least one correlation result, to update the edge feature of the target edge.

17. The apparatus according to claim 16, wherein both the first non-linear unit and the second non-linear unit are implemented by using a neural network in the GNN.

18. The apparatus according to claim 16 or 17, wherein both the first non-linear unit and the second non-linear unit have (n-1)-dimensional permutation equivariance, and n is a quantity of types of nodes in the graph data.

19. A processing apparatus, comprising:
at least one processor, configured to execute a computer program, to implement the method according to any one of claims 1 to 6, or implement the method according to any one of claims 13 to 15.

20. The processing apparatus of claim 19, wherein the processing apparatus further comprises at least one memory configured to store the computer program.

21. The processing apparatus according to claim 19 or 20, wherein the processing apparatus is a chip or a chip system.

22. A computer-readable storage medium, wherein the computer-readable storage medium stores a computer program, and when the computer program is run on a processor, the processor is enabled to perform the method according to any one of claims 1 to 6, or perform the method according to any one of claims 13 to 15.

23. A computer program product, wherein when the computer program product is run on a processor, the processor is enabled to perform the method according to any one of claims 1 to 6, or perform the method according to any one of claims 13 to 15.

Wireless communication
system 100

FIG. 1

An is a node corresponding to an $n^{th}$ antenna

Uk is a node corresponding to a $k^{th}$ terminal device

FIG. 2

FIG. 3

FIG. 4

Obtain channel state information between at least one network device and at least one terminal device ⟋ S501

Process the channel state information by using a GNN, to obtain precoding between the at least one network device and the at least one terminal device, where the GNN includes a first non-linear unit and a second non-linear unit, where the first non-linear unit is configured to calculate a correlation between an edge feature of a target edge in graph data used by the GNN and an edge feature of each edge on each target node, to obtain at least one correlation result, the target node includes a node connected to the target edge and a node of a same type as the node connected to the target edge, and the second non-linear unit is configured to aggregate a result obtained by summarizing the edge feature of the target edge and the at least one correlation result, to update the edge feature of the target edge ⟋ S502

FIG. 5

Obtain graph data obtained based on a wireless communication system ⟋ S601

Process the graph data by using a GNN, to obtain a processing result, where the GNN includes a first non-linear unit and a second non-linear unit, where the first non-linear unit is configured to calculate a correlation between an edge feature of a target edge in the graph data used by the GNN and an edge feature of each edge on each target node, to obtain at least one correlation result, the target node includes a node connected to the target edge and a node of a same type as the node connected to the target edge, and the second non-linear unit is configured to aggregate a result obtained by summarizing the edge feature of the target edge and the at least one correlation result, to update the edge feature of the target edge ⟋ S602

FIG. 6

Information processing
apparatus 700

| Obtaining module 701 | | Processing module 702 |

FIG. 7

Bus 802

| Processor 804 | | Communication interface 808 |

Memory 806

Processing apparatus 800

FIG. 8

## INTERNATIONAL SEARCH REPORT

| International application No. |
| --- |
| **PCT/CN2023/097203** |

### A. CLASSIFICATION OF SUBJECT MATTER

H04B7/0456(2017.01)i; G06N3/08(2023.01)i

According to International Patent Classification (IPC) or to both national classification and IPC

### B. FIELDS SEARCHED

Minimum documentation searched (classification system followed by classification symbols)

IPC:H04B; G06N

Documentation searched other than minimum documentation to the extent that such documents are included in the fields searched

Electronic data base consulted during the international search (name of data base and, where practicable, search terms used)

CNABS, CNTXT, VEN, EPTXT, USTXT, WOTXT, CNKI, IEEE: 图, 神经网络, 预编码, 信道, 边, 相关, 关联, 聚合, 汇总, graph, neural, precoding, channel, CSI, edge, correlation, relation, aggregate, combination

### C. DOCUMENTS CONSIDERED TO BE RELEVANT

| Category* | Citation of document, with indication, where appropriate, of the relevant passages | Relevant to claim No. |
| --- | --- | --- |
| A | ZHAO, Baichuan et al. "Learning Precoding Policy: CNN or GNN?" *2022 IEEE Wireless Communications and Networking Conference (WCNC)*, 16 May 2022 (2022-05-16), sections II and III | 1-23 |
| A | CN 115238134 A (ALIPAY LAB (SINGAPORE) CO., LTD.) 25 October 2022 (2022-10-25) entire document | 1-23 |
| A | WO 2023018607 A1 (THE BOARD OF TRUSTEES OF THE UNIVERSITY OF ILLINOIS) 16 February 2023 (2023-02-16) entire document | 1-23 |

☐ Further documents are listed in the continuation of Box C.    ☑ See patent family annex.

| | |
| --- | --- |
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **17 January 2024** | **21 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/097203**

| Patent document cited in search report | | | Publication date (day/month/year) | Patent family member(s) | Publication date (day/month/year) |
|---|---|---|---|---|---|
| CN | 115238134 | A | 25 October 2022 | None | |
| WO | 2023018607 | A1 | 16 February 2023 | None | |

Form PCT/ISA/210 (patent family annex) (July 2022)